(19) Europäisches Patentamt
European Patent Office
Office européen des brevets

(11) Veröffentlichungsnummer: **0 348 756 B1**

(12) **EUROPÄISCHE PATENTSCHRIFT**

(45) Veröffentlichungstag der Patentschrift: **07.04.93**

(51) Int. Cl.$^5$: **C04B 11/28**, C04B 7/26

(21) Anmeldenummer: **89110970.4**

(22) Anmeldetag: **16.06.89**

# (54) Verfahren zum Herstellen eines Bindemittels und seine Verwendung.

(30) Priorität: **27.06.88 DE 3821657**

(43) Veröffentlichungstag der Anmeldung:
**03.01.90 Patentblatt 90/01**

(45) Bekanntmachung des Hinweises auf die Patenterteilung:
**07.04.93 Patentblatt 93/14**

(84) Benannte Vertragsstaaten:
**AT BE CH DE ES FR GB GR IT LI LU NL SE**

(56) Entgegenhaltungen:
**AT-E- 23 516**
**DE-A- 2 803 764**
**DE-A- 2 906 230**

(73) Patentinhaber: **KALKWERKE RHEINE GMBH**
**Dietrich-Benking-Strasse 49**
**W-4630 Bochum 4(DE)**

(72) Erfinder: **Koslowski, Thomas, Dr.**
**Am Brombeerhang 15**
**W-5100 Aachen(DE)**
Erfinder: **Ludwig, Udo, Prof. Dr.**
**Düserhofstrasse 48**
**W-5100 Aachen(DE)**
Erfinder: **Fröhlich, Alexander, Dr.**
**Lütticher Strasse 38**
**W-5100 Aachen(DE)**

(74) Vertreter: **Bauer, Hubert, Dipl.-Ing.**
**Am Keilbusch 4**
**W-5100 Aachen (DE)**

Anmerkung: Innerhalb von neun Monaten nach der Bekanntmachung des Hinweises auf die Erteilung des europäischen Patents kann jedermann beim Europäischen Patentamt gegen das erteilte europäische Patent Einspruch einlegen. Der Einspruch ist schriftlich einzureichen und zu begründen. Er gilt erst als eingelegt, wenn die Einspruchsgebühr entrichtet worden ist (Art. 99(1) Europäisches Patentübereinkommen).



Rank Xerox (UK) Business Services
(3.10/3.5x/3.0.1)

## Beschreibung

Die Erfindung betrifft ein Verfahren zur Herstellung eines Bindemittels aus einem bei der Rauchgasentschwefelung anfallenden Calciumsulfit und/oder -sulfat und -hydroxid oder -carbonat enthaltenden Entschwefelungsprodukt, wobei dieses einem Oxidations- und Calciniervorgang unterworfen wird. Die Erfindung betrifft weiterhin die Verwendung des nach diesem Verfahren hergestellten Bindemittels.

Insbesondere bei der trockenen oder halbtrockenen Entschwefelung von Rauchgasen aus dem betrieb von Steinkohlenkraftwerken fällt ein Entschwefelungsprodukt an, das sich im wesentlichen zusammensetzt aus:

| | |
|---|---|
| - Calciumsulfit-Halbhydrat | $CaSO_3 * 0,5\ H_2O$ |
| - Calciumsulfat-Halbhydrat | $CaSO_4 * 0,5\ H_2O$ |
| - Calciumhydroxid | $Ca\ (OH)_2$ |
| - Calciumcarbonat | $CaCO_3$ |
| - Spuren von Steinkohlenflugasche. | |

Die Deponierung eines derartigen Entschwefelungsproduktes bereitet erhebliche Schwierigkeiten, da zu berücksichtigen ist, daß in dem Produkt nicht nur lösliche Sulfate sondern auch sulfitische Stoffe enthalten sind, die auf Grundwasser eine sauerstoffentziehende Wirkung ausüben.

Aus der DE 30 37 056 A1 ist es bereits bekannt, derartige, bei der nassen Rauchgasentschwefelung anfallende Produkte aus Calciumsulfit-Halbhydrat und Calciumsulfat-Dihydrat so zu behandeln, daß sie sich für die Herstellung von Zement verwenden lassen und insoweit eine umweltbelastende Deponie nicht erforderlich ist. Dazu wird das aus der Verbrennung von fossilen Brennstoffen enthaltene Rauchgas in einem Wäscher mit einer calciumhaltigen Suspension behandelt, wobei unter anderem Calciumsulfit-Halbhydrat entsteht. Dieses wird durch Zugabe von Luft-Sauerstoff zu einem Teil in eine Calciumsulfat-Dihydrat enthaltende Suspension umgewandelt, die einem Wasserkreislauf entzogen, Eindickern zugeführt und darin weitgehend entwässert wird. Der so mit einer begrenzten Restfeuchte anfallende Feststoff wird entfernt, während die Flüssigkeit vorzugsweise dem Wäscher wieder zugeführt wird.

Aus der Zeitschrift ZEMENT-KALK-GIPS, Nr. 1/1986 (39. Jahrgang), Seite 33 bis 35 ist es weiterhin bekannt, das bei einem halbtrockenen Rauchgasentschwefelungsverfahren anfallende Entschwefelungsprodukt durch Oxidation in ein unschädliches und auf dem Bausektor einsetzbares Produkt in Form von Anhydrit ($CaSO_4$) zu überführen, wobei aus einem sulfithaltigen Produkt durch Oxidation ein technisches Calciumsulfat ($CaSO_4$) hergestellt wird, das sich zum Einsatz als Sulfat-Träger im Portland- oder Hochofenzement eignet.

In der Gipstechnologie ist es allgemein bekannt, Bindemittel zu verwenden, deren Festigkeitsbildung auf der folgenden Reaktion beruht:

$$(1)\quad \underset{\text{(Calciumsulfat-Anhydrit, II)}}{CaSO_4 + 2H_2O} \xrightarrow{\text{(Anreger)}} \underset{\text{(Calciumsulfat-Dihydrat)}}{CaSO_4 * 2H_2O}$$

Die Bindemittel zeichnen sich vor allem dadurch aus, daß sie bei Pasten, Mörteln oder Betonen schnell zu hohen Festigkeiten führen. Beispielsweise wird diese Reaktion beim selbstnivellierenden Estrich auf der Basis von synthetischen Calciumsulfat-Anhydrit ($CaSO_4$) oder bei Untertagebaustoffen auf der Basis von natürlichem Calciumsulfat-Anhydrit genutzt.

Die festigkeitsbildende Phase in gipsgebundenen Produkten, gleichgültig, ob als Ausgangsprodukt

| | |
|---|---|
| - Calciumsulfat-Anhydrat (II), | $CaSO_4$ |
| oder | |
| - Calciumsulfat-Halbhydrat | $CaSO_4 * 0,5\ H_2O$ |

verwendet wird, stellt immer das Calciumsulfat-Dihydrat ($CaSO_4 \times 2H_2O$) dar. Calciumsulfat-Dihydrat (Gips) besitzt im Wasser eine Löslichkeit von 1,81 g/l bei 3 °C bzw. 2,04 g/l bei 50 °C. Hierdurch ergibt sich für

die gängigen Gipsbaustoffe eine erhöhte Wasserempfindlichkeit, welche die Verwendung solcher Produkte in vielen Anwendungsbereichen einschränkt.

Weiterhin wird es als nachteilig angesehen, daß Produkten, deren festigkeitsbildende Reaktion gemäß der Reaktion (1) verläuft, beispielsweise als Untertagebaustoffe, hinsichtlich der Temperatur bei der Anwendung enge Grenzen gesetzt sind. Dies betrifft insbesondere das Anregersystem nach der Reaktion (1), dessen Wirksamkeit ab 35 °C abwärts stark nachläßt.

Der Erfindung liegt die Aufgabe zugrunde, ein Verfahren der eingangs beschriebenen Art vorzuschlagen, mit dem sich aus Entschwefelungs- und anderen Nebenprodukten ein Entsorgungsprodukt schaffen läßt, das als Bindemittelmischung verwendbar ist, ohne die vorbeschriebenen Nachteile aufzuweisen, und somit für Anwendungsbereiche geeignet ist, in denen bisher gipsgebundene Produkte nicht oder nur unter aufwendigen Schutzmaßnahmen eingesetzt werden können.

Zur Lösung dieser Aufgabe wird von einem Verfahren der im Oberbegriff des Anspruchs 1 genannten gattungsgemäßen Art ausgegangen und erfindungsgemäß vorgeschlagen, nach den im kennzeichnenden Teil desselben angegebenen Merkmalen zu verfahren.

Durch das erfindungsgemäße Vermischen des calciumhydroxid-oder calciumcarbonathaltigen Entschwefelungsproduktes mit Flugasche normaler Zusammensetzung in der Art, daß beim nachfolgenden Oxidations- und Calcinierungsvorgang bei 700 - 900 °C der Gehalt an freiem Kalk ($Ca(OH)_2$, CaO) vollständig an mit Wasser reaktionsfähige Aluminate und Silikate gebunden wird, werden beim Oxidations- und Calcinierungsvorgang neben Calciumsulfat-Anhydrit (II) reaktive Calciumaluminate in Form von $C_{12}A_7$, $C_3A_3Cs$ sowie reaktive Calciumsilikate in Form von $\beta$-$C_2S$ gebildet. Folglich verläuft in daraus hergestellten Pasten, Mörteln und Betonen die festigkeitsbildende Reaktion nicht gemäß der Reaktion (1) und es wird auch kein Calciumsulfat-Dihydrat ($CaSO_4 * 2H_2O$) gebildet, sondern es entstehen im wesentlichen Reaktionsprodukte nach den folgenden Reaktionen:

(2) $C_3A_3Cs + 6Cs + 6C + 76H \rightarrow 2C_3ACs_3H_{32} + C_3ACsH_{12}$

(3) $C_{12}A_7 + 19Cs + 9C + 2O_4H \rightarrow 6C_3ACs_3\ H_{32} + C_3ACsH_{12}$

(4) $C_2S + 2H \rightarrow CSH + CH$

Durch Versuche konnte nachgewiesen werden, daß diese Reaktionen nicht auf den Temperaturbereich <35 °C begrenzt, sondern durch höhere Temperaturen stark beschleunigbar sind. Darüber hinaus zeigt sich, daß die Reaktionsprodukte durch eine wesentlich geringere Löslichkeit im Wasser gekennzeichnet sind und sie somit eine erheblich bessere Wasserbeständigkeit als klassische gipsgebundene Produkte besitzen.

Durch die Verwendung von kieselsäurereichen Flugaschen kann der Anteil mit wasserreaktionsfähiger Silikate und durch die Verwendung von $Al_2O_3$-reichen Flugaschen kann der Anteil mit wasserreaktionsfähiger Aluminate erhöht werden. Es versteht sich, daß unterschiedliche Flugaschenarten in beliebigen Verhältnissen miteinander vermischt eingesetzt werden können.

Im Sinne des erfindungsgemäßen Verfahrens sind mit Calciumsulfat alle Phasen des Systems $CaSO_4$-$H_2O$ und mit Calciumsulfit alle Phasen des Systems $CaSO_3$-$H_2O$ gemeint.

Die Oxidation und Calcinierung ist bei Temperaturen von 700 - 900 °C, insbesondere 750 - 900 °C, vorzugsweise 800 - 850 °C, solange durchzuführen, bis die beschriebenen, mit Wasser reaktionsfähigen Phasen gebildet sind und beispielsweise kein Calciumsulfit-Halbhydrat ($CaSO_3 * 0{,}5H_2O$) mehr im Produkt verbleibt.

Als Oxidations- und Calciniergeräte sind herkömmliche Aggregate, etwa Drehrohröfen, Stromcalcinatoren, Wirbelschichtcalcinatoren u.a. geeignet.

Bei der Oxidation und Calcinierung des nach dem erfindungsgemäßen Verfahren gemischten Entschwefelungsproduktes wird ein Mehrphasengemisch gebildet, das die reaktionsfähigen Verbindungen mit folgenden Anteilen enthält:

| | | | | | |
|---|---|---|---|---|---|
| Cs | = | 5 - 60 | Gewichtsteile | (vorzugsweise: | 20 - 35)* |
| $C_{12}A_7$ | = | 2 - 35 | -"- | ( -"- : | 5 - 20) |
| $C_3A_3Cs$ | = | 1 - 20 | -"- | ( -"- : | 5 - 10) |
| $C_2S$ | = | 3 - 50 | -"- | ( -"- : | 5 - 25) |

* C steht für CaO
s -"- für $SO_3$
A -"- für $AL_2O_3$
S -"- für $SiO_2$.

Das erfindungsgemäße Verfahren sieht weiter vor:

- Aufmahlen des oxidierten und calcinierten Produktes auf Mahlfeinheiten von 3.000 - 10.000 $cm^2/g$ (Blaine) und vorzugsweise 6.000 - 7.000 $cm^2/g$ (Blaine).
- Vermischen des gemahlenen Produktes mit gemahlenem Hüttensand der Zusammensetzung

$$\frac{CaO + MgO + AL_2O_3}{SiO_2} \geq 1.1$$

  insbesondere ≧ 1.6 und vorzugsweise ≧ 1.8
  in einer Mahlfeinheit von 2.500 - 5.000 $cm^2/g$ (Blaine), insbesondere 3.000 - 4.500 $cm^2/g$ (Blaine) und vorzugsweise 3.500 - 4.000 $cm^2/g$ (Blaine) in einer Dosierung von 10 bis 50, vorzugsweise 15 bis 20, Gewichtsteilen auf 100 Gewichtsteile des oxidierten und calcinierten Produktes.
- Zumischen eines Beschleunigers in Form von wasserhaltigem oder wasserfreiem Eisensulfat in einer Dosierung von 1 bis 5, vorzugsweise 2 bis 3, Gewichtsteilen auf 100 Gewichtsteile des oxidierten und calcinierten Produktes.
- Zumischen eines Reaktionsverzögerers in Form azyklischer Carbonsäuren, etwa als
  * Zitronensäure
  * Weinsäure
  * Glukonsäure
  * Äpfelsäure
  * u.a.

oder deren Salze bzw. in Kombination mit deren Salzen.

Vorteilhafte Dosierungen sind 0,05 bis 0,2 Gewichtsteile auf 100 Gewichtsteile des oxidierten und calcinierten Produktes.

Weiterhin können Fließmittel, z. B. in Form von kondensierten Melaminharzprodukten, Naphtalinsulfonaten u.a., Verdicker, etwa in Form von Methylcellulosen oder Haft- oder Klebemitteln zugesetzt werden.

Entsprechend dem Verwendungszweck können aus dem Bindemittel mit Zusatzstoffen, Zusatzmitteln und Zuschlägen Pasten, Mörtel oder Betone hergestellt werden.

Durchführungsbeispiel:

Ein bei 800 °C calciniertes und oxidiertes Produkt, hergestellt durch Vermischen von 65 Gewichtsteilen sulfitisches Entschwefelungsprodukt mit 35 Gewichtsteilen Steinkohlenflugasche, und gemahlen auf eine Mahlfeinheit von 7.500 $cm^2/g$ (Blaine) wird verwendet mit:

| | |
|---|---|
| | 33,2 Gewichtsteile, |
| und daraus ein Trockenmörtel hergestellt durch Vermischen mit | |
| gemahlenem Hüttensand: | 6,0 Gewichtsteile |
| Eisensulfat: | 0,8 Gewichtsteile |
| Kalkbrechsand: (0 - 4 mm) | 60,0 Gewichtsteile |
| Zitronensäuremonohydrat: | 0,03 Gewichtsteile |

Mit Wasser im Verhältnis Wasser/Mörtel = 0,17 angemacht, ergibt sich ein gut verarbeitbarer Frischmörtel mit einem Ausbreitmaß (AB) von 18 cm.

Das Erstarren beginnt nach ca. 30 Minuten.

An Reaktionsprodukten des Bindemittels können nachgewiesen werden:

- $C_3ACs_3H_{32}$
- $C_3ACsH_{12}$
- CsH

wobei H für $H_2O$ steht.

Abhängig von der gewählten Lagerungsart ergeben sich die in der Figur dargestellten Druckfestigkeiten.

Die Druckfestigkeiten $\beta_D$ (N/mm$^2$) sind auf der Ordinate und die Lagerungsdauer t (d), auf der Abszisse dargestellt für den im Durchführungsbeispiel verwendeten Mörtel bei der Lagerung unter Wasser, bei der Lagerung im Klima 30 °C/85 % r.F. und bei Laborluftlagerung (ca. 18 °C/50 % r.F.)

**Patentansprüche**

**1.** Verfahren zum Herstellen eines Bindemittels aus einem bei der Rauchgasentschwefelung anfallenden, Calciumsulfit und/oder -sulfat und -hydroxid oder -carbonat enthaltenden Entschwefelungsprodukt, das einem Oxidations- und Calciniervorgang unterworfen wird, wobei
   - das Entschwefelungsprodukt zunächst mit flugasche in einer solchen Menge vermischt wird, daß beim nachfolgenden Oxidations- und Calciniervorgang sein Gehalt an freiem und dabei freiwerdendem Kalk vollständig an mit Wasser reaktionsfähige Aluminate und Silikate gebunden wird,
   - das so erzeugte, im wesentlichen aus
     Cs in einer Menge etwa von 5 bis 60 Gewichtsteilen
     $C_{12}A_7$ in einer Menge etwa von 2 bis 35 Gewichtsteilen
     $C_3A_3Cs$ in einer Menge etwa von 1 bis 20 Gewichtsteilen
     ß-$C_2S$ in einer Menge etwa von 3 bis 50 Gewichtsteilen
     gebildete Mehrphasengemisch auf eine Mahlfeinheit mit einer spezifischen Oberfläche von 3.000 bis 10.000 cm$^2$/g (nach Blaine) aufgemahlen wird
   - und schließlich 100 Gewichtsteile des so aufgemahlenen Mehrphasengemisches mit 10 bis 50 Gewichtsteilen Hüttensand mit einer Mahlfeinheit etwa von 2.500 bis 5.000 cm$^2$/g (nach Blaine) gemischt werden.

**2.** Verfahren nach Anspruch 1, dadurch gekennzeichnet, daß
   - das aus dem Entschwefelungsprodukt und Flugasche hergestellte, im wesentlichen aus
     Cs in einer Menge etwa von 20 bis 35 Gewichtsteilen
     $C_{12}A_7$ in einer Menge etwa von 5 bis 20 Gewichtsteilen
     $C_3A_3Cs$ in einer Menge etwa von 5 bis 10 Gewichtsteilen
     $\beta$-$C_2S$ in einer Menge etwa von 5 bis 25 Gewichtsteilen
     gebildete Mehrphasengemisch auf eine Mahlfeinheit mit einer spezifischen Oberfläche von 6.000 bis 7.000 cm$^2$/g (nach Blaine) aufgemahlen wird,
   - 100 Gewichtsteile des so aufgemahlenen Mehrphasengemisches mit 15 bis 20 Gewichtsteilen Hüttensand mit einer Mahlfeinheit etwa von 3.000 bis 4.500 cm$^2$/g (nach Blaine) gemischt werden.

**3.** Verfahren nach Anspruch 1 oder 2, dadurch gekennzeichnet, daß der Anteil mit Wasser reaktionsfähiger Aluminate und Silikate durch die Art der verwendeten Flugasche gesteuert wird.

**4.** Verfahren nach mindestens einem der Ansprüche 1 oder 3, dadurch gekennzeichnet, daß der Oxidations- und Calcinierungsvorgang bei Temperaturen zwischen 700 und 950 °C, vorzugsweise zwischen 750 und 900 °C und insbesondere zwischen 800 und 850 °C, durchgeführt wird.

**5.** Verfahren nach mindestens einem der Ansprüche 1 bis 4, dadurch gekennzeichnet, daß Hüttensand mit einer Mahlfeinheit etwa von 3.500 bis 4.000 $cm^2/g$ (nach Blaine), verwendet wird.

**6.** Verfahren nach mindestens einem der Ansprüche 1 bis 5, dadurch gekennzeichnet, daß Hüttensand einer Zusammensetzung mit ($CaO + MgO + Al_2O_3$)/$SiO_2$ größer oder gleich 1,1, vorzugsweise größer oder gleich 1,6 und insbesondere größer oder gleich 1,8, verwendet wird.

**7.** Verfahren nach mindestens einem der Ansprüche 1 bis 6, dadurch gekennzeichnet, daß dem Bindemittel ein Reaktionsbeschleuniger in Form von wasserhaltigem oder wasserfreiem Eisensulfat in einer Dosierung von 1 bis 5, vorzugsweise 2 bis 3, Gewichtsteilen auf 100 Gewichtsteile Mehrphasengemisch zugemischt wird.

**8.** Verfahren nach mindestens einem der Ansprüche 1 bis 7, dadurch gekennzeichnet, daß dem Bindemittel ein Reaktionsverzögerer in Form einer azyklischen Carbonsäure oder eines löslichen Salzes hiervon in einer Menge von 0,05 bis 0,2 Gewichtsteilen auf 100 Gewichtsteile Mehrphasengemisch zugesetzt wird.

**9.** Verfahren nach Anspruch 8, dadurch gekennzeichnet, daß dem Mehrphasengemisch Zitronensäure-Monohydrat zugesetzt wird.

**10.** Verwendung des nach mindestens einem der Ansprüche 1 bis 9 hergestellten Mittels als Komponente für Untertagebaustof fe oder als Grundstoff zur Herstellung von Bauteilen oder als Schnellerstarrungskomponente in Mörteln und Betonen.

## Claims

**1.** Process of manufacturing a binding agent of a desulfurization product, which accummulates during flue-gas desulfurization and contains calcium sulfide and/or -sulfate and/or -sulfate and -hydroxide or carbonate and which is subjected to an oxidation and calcinating process, wherein

- the desulfurization product is initially mixed with flue ashes at such quantity that in a subsequent oxidation and calcinating process its content of free and thereby freed lime is fully bound to water-reactive aluminates and silicates,
- a thus produced polyphase mixture, which is substantially composed of

  Cs at a quantity of approximately 5 to 60 parts by weight
  $C_{12}A_7$ at a quantity of approximately 2 to 35 parts by weight
  $C_3A_3Cs$ at a quantity of approximately 1 to 20 parts by weight
  ß-$C_2S$ at a quantity of approximately 3 to 50 parts by weight,

  is ground to a fineness of grinding with a specific surface of between 3,000 and 10,000 $cm^2/g$ (after Blaine),
- and finally 100 parts by weight of a thus ground polyphase mixture is mixed with between 10 and 50 parts by weight of metallurgical sand with a fineness of grinding of between approximately 2,500 and 5,000 $cm^2/g$ (after Blaine).

**2.** Process according to claim 1, **characterised in that**

- a polyphase mixture, which is produced from the desulfurization product and flue ashes and substantially composed of

  CS at a quantity of approximately 20 to 35 parts by weight
  $C_{12}A_7$ at a quantity of approximately 5 to 20 parts by weight
  $C_3A_3Cs$ at a quantity of approximately 5 to 10 parts by weight
  ß-$C_2S$ at a quantity of approximately 5 to 25 parts by weight,

  is ground to a fineness of grinding with a specific surface of between 6,000 and 7,000 $cm^2/g$ (after Blaine),
- 100 parts by weight of a thus ground polyphase mixture are mixed with between 15 and 20 parts by weight of metallurgical sand with a fineness of grinding of between approximately 3,000 and 4,500 $cm^2/g$ (after Blaine).

**3.** Process according to claim 1 or 2, **characterised in that** the portion of water-reactive aluminates and silicates is controlled by the type of flue ashes used.

**4.** Process according to at least one of claims 1 or 3, ch**aracterised in that** the oxidation and calcination process is carried out at temperatures between 700 and 950 ° C, preferably between 750 and 900 ° C and particularly between 800 and 850 ° C.

**5.** Process according to at least one of claims 1 to 4, **characterised in that** metallurgical sand of a fineness of grinding of approximately between 3,500 and 4,000 $cm^2/g$ (after Blaine) is used.

**6.** Process according to at least one of claims 1 to 5, **characterised in that** metallurgical sand with a composition of $(CaO + MgO + Al_2O_3)/SiO_2$ above or equal 1.1, preferably above or equal 1.6 and particularly above or equal 1.8 is used.

**7.** Process according to at least one of claims 1 to 6, **characterised in that** a reaction accelerator in the form of aqueous or non-aqueous iron sulfate at a dosage of 1 to 5, preferably 2 to 3, parts by weight per 100 parts by weight of polyphase mixture is mixed into the binding agent.

**8.** Process according to at least one of claims 1 to 7, **characterised in that** a reaction decelerator in the form of an acyclic carboxylic acid or a soluble salt thereof in the amount of between 0.05 and 0.2 parts by weight per 100 parts by weight of polyphase mixture is added to the binding agent.

**9.** Process according to claim 8, **characterised in that** citric acid monohydrate is added to the polyphase mixture.

**10.** Use of a material produced according to at least one of claims 1 to 9 as a component of underground construction materials or as basic material for producing construction components or as a rapid-setting component in mortars and concretes.

**Revendications**

**1.** Procédé de fabrication d'un liant en utilisant un produit de désulfuration des gaz de fumée contenant du sulfite et/ou du sulfate et de l'hydroxyde ou du carbonate de calcium, qui est soumis à une opération d'oxydation et de calcination, dans lequel:

- le produit de désulfuration est mélangé tout d'abord avec des cendres volantes en quantités telles qu'au cours de l'opération ultérieure d'oxydation et de calcination, sa teneur en chaux libre et libérée à ce moment est liée complètement à des aluminates et des silicates pouvant réagir avec l'eau,
- le mélange à plusieurs phases ainsi formé et constitué essentiellement de:

  | | |
  |---|---|
  | Cs | en quantité d'environ 5 à 60 parties en poids |
  | $C_{12}A_7$ | en quantité d'environ 2 à 35 parties en poids |
  | $C_3A_3Cs$ | en quantité d'environ 1 à 20 parties en poids |
  | ß-$_2$S | en quantité d'environ 3 à 50 parties en poids |

  est broyé avec une finesse de broyage correspondant à une surface spécifique de 3.000 à 10.000 $cm^2/g$ (selon Blaine)
- et, enfin, 100 parties en poids du mélange à plusieurs phases ainsi broyé sont mélangées avec 10 à 50 parties en poids de sable de haut-fourneau ayant une finesse de broyage d'environ 2.500 à 5.000 $cm^2/g$ (selon Blaine).

**2.** Procédé selon la revendication 1, caractérisé en ce que

- le mélange à plusieurs phases, préparé avec le produit de désulfuration et les cendres volantes, formé essentiellement de:

  | | |
  |---|---|
  | Cs | en quantité d'environ 20 à 35 parties en poids |
  | $C_{12}A_7$ | en quantité d'environ 5 à 20 parties en poids |
  | $C_3A_3Cs$ | en quantité d'environ 5 à 10 parties en poids |
  | ß-$C_2S$ | en quantité d'environ 5 à 25 parties en poids |

  est broyé avec une finesse de broyage correspondant à une surface spécifique de 6.000 à 7.000 $cm^2/g$ (selon Blaine)
- 100 parties en poids du mélange à plusieurs phases ainsi broyé sont mélangées avec 15 à 20 parties en poids de sable de haut-fourneau ayant une finesse de broyage d'environ 3.000 à 4.500 $cm^3/g$ (selon Blaine).

3. Procédé selon la revendication 1 ou 2, caractérisé en ce que la proportion d'aluminates et de silicates pouvant réagir avec l'eau est contrôlée par la nature des cendres volantes utilisées.

4. Procédé selon au moins une des revendications 1 à 3, caractérisé en ce que l'opération d'oxydation et de calcination est effectuée à des températures entre 700 et 950 °C et, de préférence, entre 750 et 900 °C et, de préférence encore, entre 800 et 850 °C.

5. Procédé selon au moins l'une des revendications 1 à 4, caractérisé en ce que le sable de haut-fourneau est utilisé avec une finesse de broyage d'environ 3.500 à 4.000 $cm^2/g$ (selon Blaine).

6. Procédé selon au moins l'une des revendications 1 à 5, caractérisé en ce que le sable de haut-fourneau utilisé a une composition avec $(CaO + MgO + Al_2O_3)/SiO_2$ supérieure ou égale à 1,1 et, de préférence, supérieure ou égale à 1,6 et, de préférence encore, supérieure ou égale à 1,8.

7. Procédé selon au moins l'une des revendications 1 à 6, caractérisé en ce qu'on mélange au liant un accélérateur de réaction sous forme de sulfate de fer anhydre ou hydraté avec un dosage de 1 à 5 et, de préférence, de 2 à 3 parties en poids, rapportées à 100 parties en poids du mélange à plusieurs phases.

8. Procédé selon au moins l'une des revendications 1 à 7, caractérisé en ce que l'on ajoute au liant un ralentisseur de réaction sous forme d'un acide carboxylique acyclique ou d'un sel soluble de celui-ci en quantité de 0,05 à 0,2 partie en poids, rapportée à 100 parties en poids du mélange à plusieurs phases.

9. Procédé selon la revendication 8, caractérisé en ce qu'on ajoute au mélange à plusieurs phases de l'acide citrique monohydraté.

10. Utilisation du produit préparé selon au moins l'une des revendications 1 à 9, comme constituant pour les matériaux pour travaux souterrains ou comme matières premières pour la fabrication d'éléments de construction ou comme constituants à prise rapide dans les mortiers et les bétons.

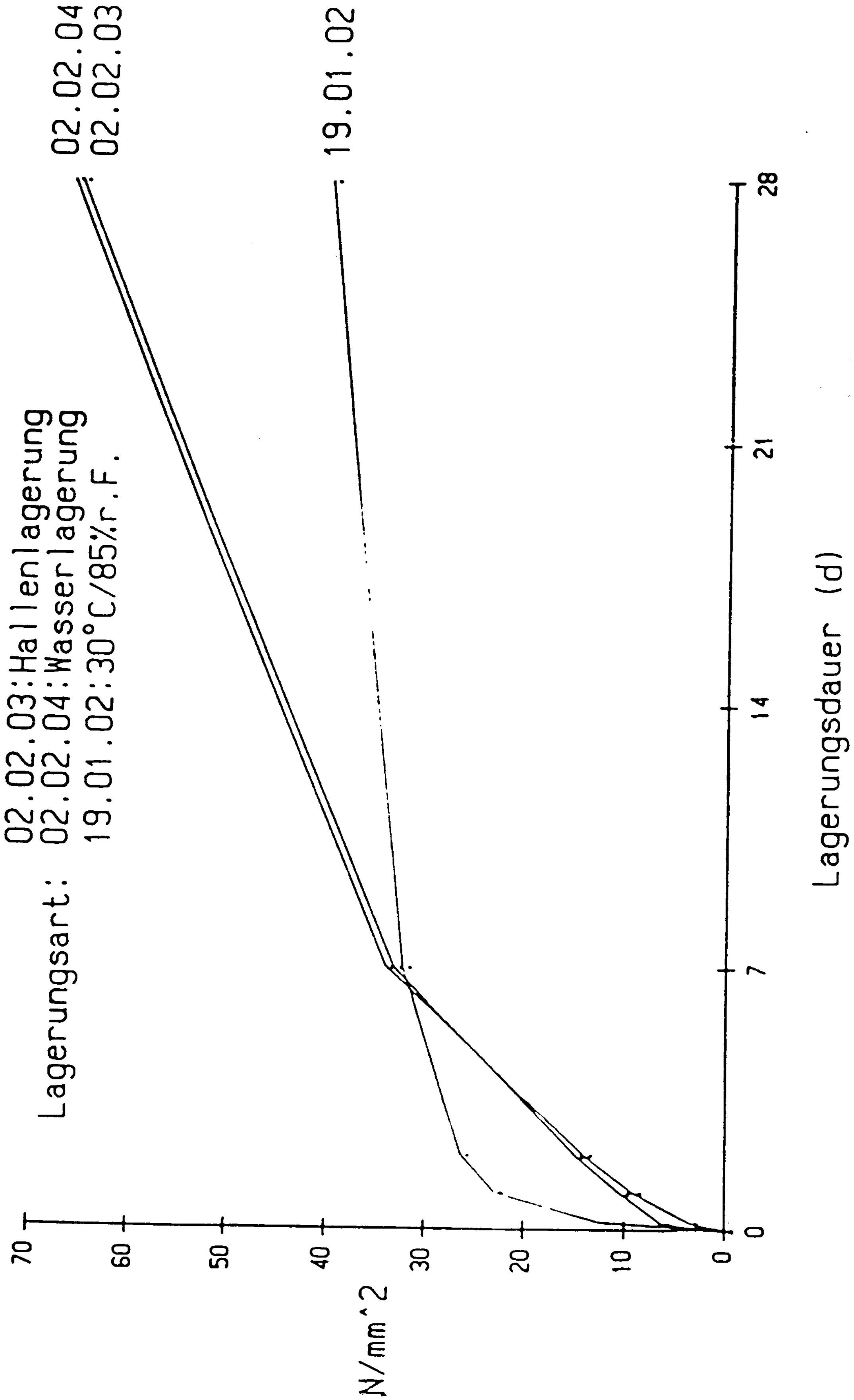
Lagerungsart: 02.02.03:Hallenlagerung
02.02.04:Wasserlagerung
19.01.02:30°C/85%r.F.
02.02.04
02.02.03
19.01.02
N/mm^2
0
10
20
30
40
50
60
70
0
7
14
21
28
Lagerungsdauer (d)